# EUROPEAN PATENT APPLICATION

(11) **EP 1 318 056 A2**
(43) Date of publication of application: **11.06.2003**
(21) Application number: 02078767.7
(22) Date of filing: 13.09.2002
(51) Int. Cl.: B60T 8/36, F16K 31/06

(54) **Valve and method for a brake control actuator**

(30) Priority: 09.10.2001 US 974739
(71) Applicant: Delphi Technologies, Inc., Troy, MI 48007 (US)
(72) Inventor: Cano, Jose R., Juarez, Chihuahua 32696 (MX); Saenz, Raymundo, El Paso, TX 79912 (US)
(74) Representative: Denton, Michael John

(57) **Abstract**

Valve (100) and method (200) for a brake control actuator are provided. The valve includes a rod (102) operable between respective operating conditions to selectively allow passage of brake fluid through the valve. The valve further includes a ball (104) affixed at one end of the rod. The ball includes a sealing section (106) that, upon engagement against a ball-receiving seat (108) in the valve, blocks passage to brake fluid therethrough. The ball further includes a mounting section (110) integral with the sealing section. The mounting section is configured to provide a reduced footprint relative to a spheroidal footprint and enable a strong mechanical joint between the mounting section (110) and the rod (102).

## Description

### Technical Field

The present invention is generally related to braking systems, and, more particularly, to a modified ball for a valve that controls passage of brake fluid in an actuator for controlled braking systems for vehicular applications.

### Background of the Invention

On controlled anti-lock braking systems (ABSs), as may be used in vehicular applications, typically, there is a normally-open valve between a master cylinder and a wheel brake cylinder allowing forward flow of pressurized braking fluid through appropriate tubing so that braking pressure is applied to the wheels. The valve further provides brake fluid isolation during a controlled braking event. In the event of sudden brake application by the driver, e.g., under an emergency or panic situation, the valve is designed to provide a relatively smooth and stable cycling of pressure to maintain sufficient road traction on the wheels and provide a controlled stop for the vehicle.

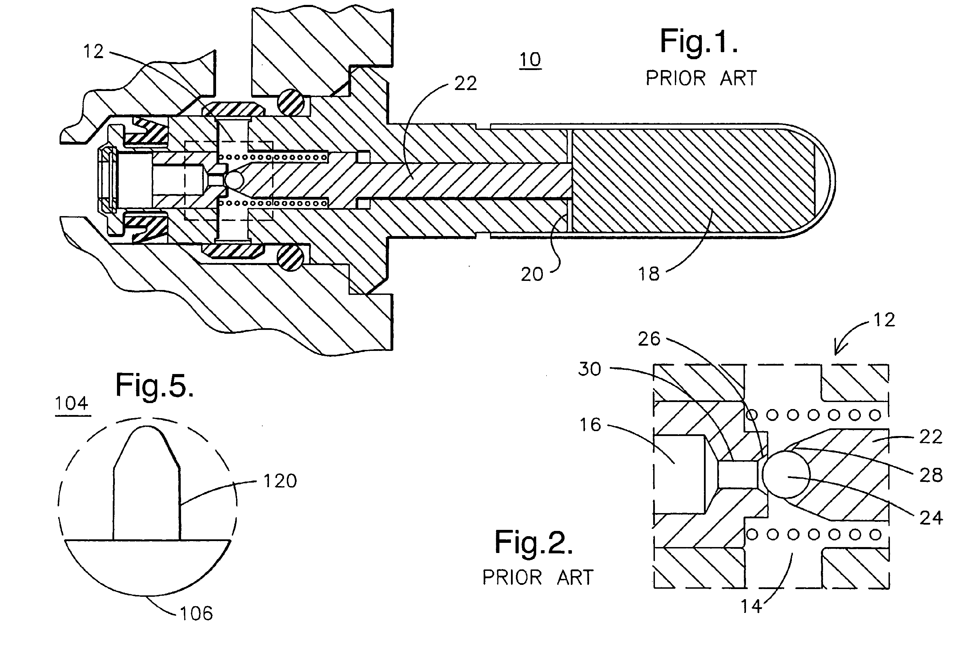

The operation of a typical anti-lock actuator 10 including a valve 12 in an exemplary ABS system will be described below in reference to FIGS. 1 through 3 to comparatively identify some of the issues that the present invention is now able to overcome. A master cylinder (not shown) is connected to an inlet port 14 of the normally open valve 12. A wheel cylinder (not shown) is connected to an outlet port 16 of the normally open valve. Under normal brake operation, a pressure build-up generated at the master cylinder is received through inlet port 14, and through the normally open valve is passed to the wheel cylinder through outlet port 16. For an ABS braking event, electromagnetic energization of the actuator causes the normally open valve to provide blockage of brake fluid. For example, electromagnetic flux may be induced across a plunger 18 and this would generate the necessary force to reduce an air-gap 20 to a minimum. The plunger 18 would cause a rod 22 including a spherical ball 24 mounted at one end of the rod to move against a chamfered seat 26 constructed at the entrance of a main control orifice 30. Typically, the fully spherical ball 24 is retained on the rod by a crimping arrangement 28 for durability and affordability. The movement of the rod stops until the ball 24 engages the chamfered seat 26 at the main control orifice 30. The length of travel for the rod between the open and closed positions is generally referred to as the stroke of the rod.

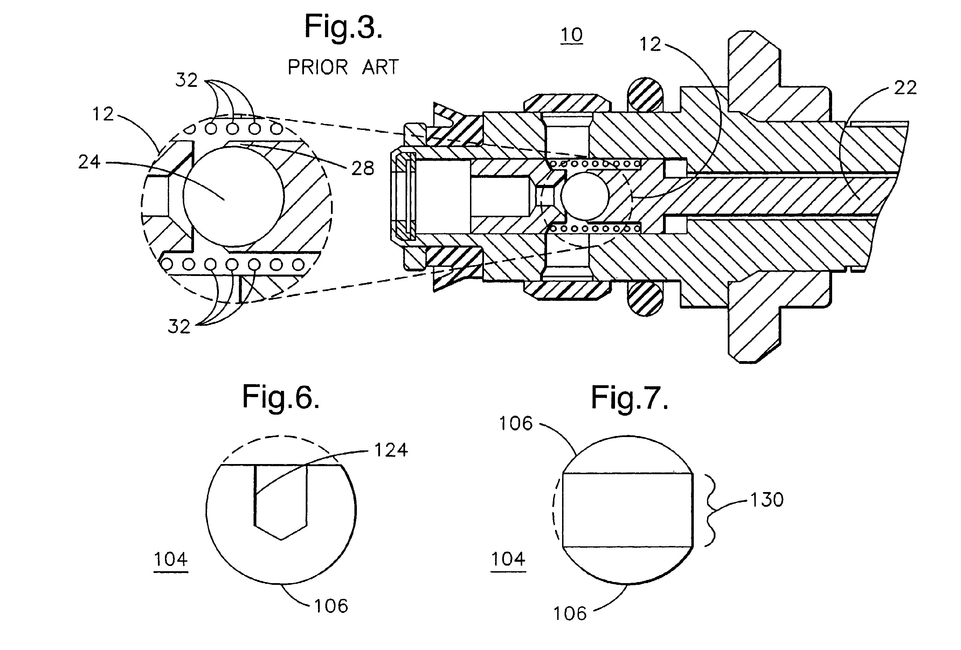

In conventional valve designs of this type, the ball 24 may comprise a chromium alloy steel spherical ball crimped onto the rod 22, generally made up of non-magnetic material. Unfortunately, the fully spherical configuration of the ball results in a crimping arrangement that takes significant space from the valve's internal chamber. With physical requirements for braking systems to become smaller and performance requirements higher, the design complexity increases. For example, as better appreciated in FIG. 3, in some designs the footprint of the ball may be substantially close to a spring 32 that causes the valve to operate in a normally open condition. Needless to say, interference of the ball 24 with spring 32 would adversely affect performance of the valve. Additionally, the volume occupied by the ball proximate to the spring may result in a weaker crimping arrangement since there will be less rod structure to be crimped against the ball.

In view of the foregoing considerations, it would be desirable to geometrically reconfigure a standard precision ball to accomplish at relatively low-cost, reduced packaging space for anti-lock actuator designs, while providing high durability and reliable fluid sealing. That is, it would be desirable to be able to modify a standard precision ball in order to reduce valve package size and still maintain the tight sealing properties required for the actuator. For example, it would be desirable to use a section of the ball for providing a durable and reliable seal and geometrically reconfigure other sections of the ball to provide a mechanically strong retention arrangement. It would be further desirable to eliminate having to extend the crimp arrangement over the full diameter of the spheroid ball of the prior art since, as suggested above, such arrangement burdensomely increases the footprint of the valve inside the chamber of the actuator, and does not necessarily result in a strong mechanical joint between the ball and the rod.

### Summary of the Invention

Generally, the present invention fulfills the foregoing needs by providing in one aspect thereof, a valve for a brake control actuator. The valve includes a rod operable between respective operating conditions to selectively allow passage of brake fluid through the valve. The valve further includes a ball affixed at one end of the rod. The ball includes a sealing section that, upon engagement against a ball-receiving seat in the valve, blocks passage to brake fluid therethrough. The ball further includes a mounting section integral with the sealing section. The mounting section is configured to provide a reduced footprint relative to an spheroidal footprint and enable a strong mechanical joint between the mounting section and the rod.

The present invention further fulfills the foregoing needs by providing in another aspect thereof, a method for arranging a valve for a brake control actuator. The valve includes a rod operable between respective operating conditions to selectively allow passage of brake fluid through the valve, the method allows configuring a ball affixable at one end of the rod. The ball is configured to include a sealing section, and a mounting section integral with the sealing section. The method further allows respectively configuring the sealing section so that upon engagement against a ball-receiving seat, the sealing section blocks passage to brake fluid therethrough, and the mounting section to provide a reduced footprint relative to an spheroidal footprint while enabling a strong mechanical joint between the mounting section and the rod. The end of the rod is configured to correspond with the mounting section of the ball. An affixing action allows to securely affix the ball to the end of the rod resulting in a strong mechanical joint between the mounting section and the rod.

### Brief Description of the Drawings

The present invention will now be described, by way of example, with reference to the accompanying drawings, in which:
FIGS. 1-3 illustrate respective cross-sectional views provided to assist the reader to better appreciate some of the issues that the present invention is now able to overcome relative to some known valve arrangements.
FIG. 4 illustrates a cross-sectional view of a brake control actuator including a valve embodying aspects of the present invention including a sealing section for precisely controlling passage of brake fluid through the valve, and including a mounting section providing a relatively compact footprint that results in a stronger mechanical joint.
FIGS. 5-10 illustrate respective cross-sectional views of exemplary configurations for the mounting section of the valve.
FIG. 11 is a flow chart depicting exemplary actions for arranging a valve in accordance with aspects of the present invention.

### Description of the Preferred Embodiment

FIG. 4 illustrates an exemplary embodiment of a valve 100 for a brake control actuator 101 in accordance with aspects of the present invention. The valve 100 is depicted in greater visual detail in the circular zoom-in with the same reference numeral shown to the left of valve 100. The valve includes a rod 102 operable between respective operating conditions, such as open and closed conditions, to selectively allow passage of brake fluid through the valve. In one exemplary embodiment, the valve comprises a normally-open value. It will be appreciated, however, that the concepts of the present invention are equally applicable independently of whether the valve is operated as a normally open or a normally closed valve. The valve further includes a ball 104 affixed at one end of the rod 102. The ball includes a sealing section 106 that upon engagement against a ball-receiving seat 108, such as a chamfered seat constructed in the valve, blocks passage to brake fluid that otherwise would pass through an orifice 109. The ball further includes a mounting section 110 integral with the sealing section 106. The mounting section is configured to provide a reduced footprint relative to a spheroidal footprint, as discussed in the background portion of this specification and as represented by the respective conceptual dashed-arcs, shown in FIGS. 5 through 10. The ball configuration enables a strong mechanical joint between the mounting section and the rod since the reduced footprint of the mounting section of the ball, for example, frees relatively more rod structure for effecting the mechanical joint between the ball and the rod.

In one exemplary embodiment, the ball 104 may comprise a steel ball, e.g., a chromium alloy steel, affixed onto the rod 102, generally made up of non-magnetic material. It will be appreciated that other alloys including non-metallic materials, such as ceramics, could be used in lieu of a steel ball. The desired ball geometry configuring may be achieved through any standard fabrication process that allows removing material from a relatively hard object in a controllable and accurate manner, such as machining, laser cutting, etc. Alternatively, the geometry of the ball may be configured using techniques that allow for shaping an object through molding, casting, etc. The techniques for affixing the ball to the rod may comprise any standard affixing techniques, such as interference fit, crimping, welding, soldering, bonding, etc.

FIG. 5 illustrates a valve embodiment corresponding to the assembled actuator arrangement of FIG. 4 wherein the mounting section comprises a pin 120 and the rod includes a bore 122 (FIG. 4) configured to receive the pin. Similarly, FIG. 6 illustrates a valve embodiment wherein the mounting section comprises a bore-defining structure 124 and the rod includes a pin configured to engage the bore-defining structure. Those skilled in the art will readily appreciate that the embodiment of FIG. 6 is, from a mechanical point of view, the flip side of the embodiment illustrated in FIG. 5. That is, the pin is constructed at the rod end instead of the mounting section of the ball, and the walls of the bore constructed within the ball comprise the mounting section.

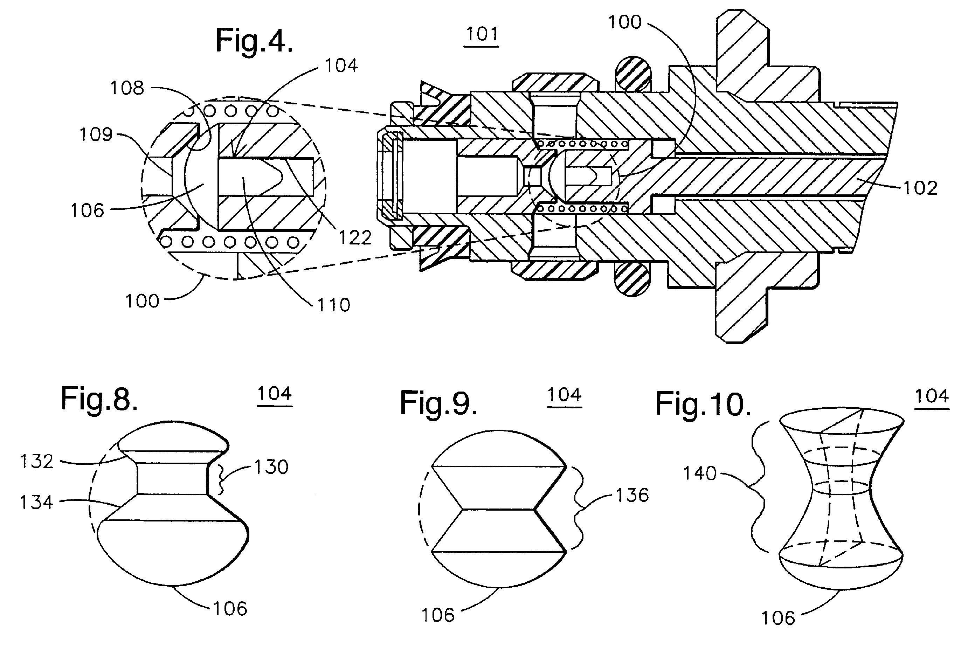

FIG. 7 illustrates a valve embodiment wherein the mounting section comprises a cylindrical section 130 circumferentially defining a midsection of the ball. As shown in FIG. 8, the cylindrical section may be bounded at opposite axial ends thereof by corresponding angled or slanting surfaces, such as surfaces 132 and 134. For example, in applications where relatively greater mechanical support may be required for the joint between the rod and the ball, the slanting surfaces 132 and 134 advantageously provide such greater mechanical support.

FIG. 9 illustrates a valve embodiment wherein the mounting section comprises a generally V-shaped notch 136. As illustrated in FIG. 10, in lieu of providing a relatively sharp angle at the two intersecting surfaces that jointly make up the V-shaped notch, it will be appreciated that the mounting section may be configured as a hyperboloid 140 defining the midsection of the ball. It will be appreciated that those skilled in the art will now be able to construct a myriad of geometrical configurations based on the teachings of the present invention. For example, the angular coverage provided by the sealing section of the ball may vary depending on the size of the orifice for passing brake fluid in a given application.

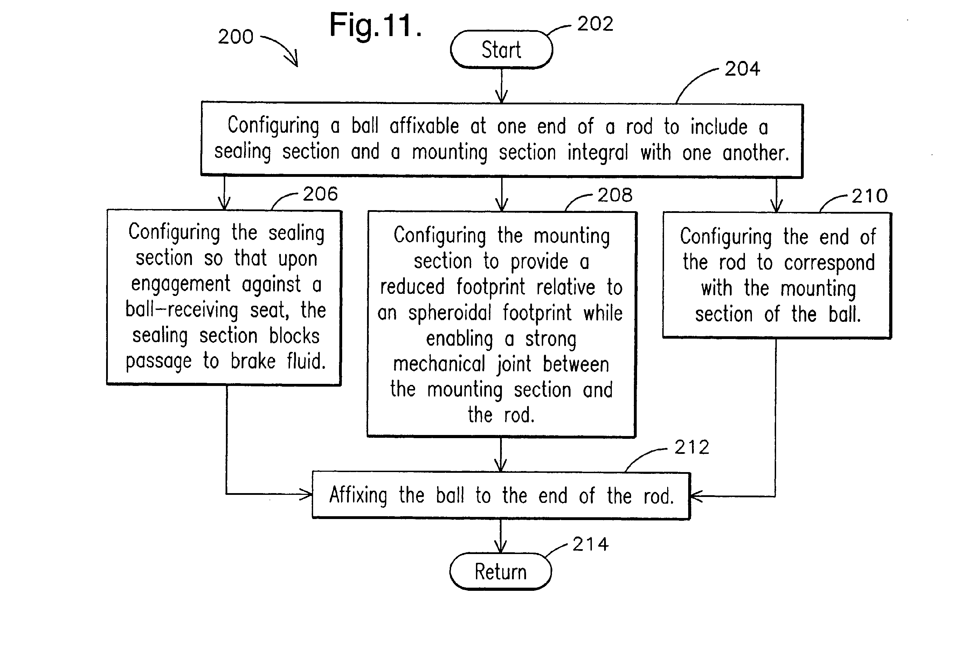

FIG. 11 illustrates a flow chart illustrating exemplary actions for arranging a valve for a brake control actuator. The valve includes a rod 102 (FIG. 4) operable between respective operating conditions to selectively allow passage of brake fluid through the valve. Subsequent to a starting action 202, at block 204, the method allows configuring a ball 104 (FIGS. 4-10) affixable at one end of the rod to include a sealing section and a mounting section integral with the sealing section.

At block 206, the method allows configuring the sealing section so that upon engagement against a ball-receiving seat, the sealing section blocks passage to brake fluid through the valve orifice. At block 208, the method allows configuring the mounting section to provide a reduced footprint relative to an spheroidal footprint while enabling a strong mechanical joint between the mounting section and the rod. Examples of the geometrical configurations for the mounting section may include: a pin 120 (FIG. 5); a bore-defining structure 124 (FIG. 6); a cylindrical mounting section 130 (FIG. 7), including slanting surfaces 132 and 134 that bound the cylindrical mounting section (FIG. 8); a V-shaped notch mounting section 136 (FIG. 9); and a hyperboloid mounting section 140 (FIG. 10). At block 210, the end of the rod is configured to correspond with the mounting section of the ball. For example, depending on the specific geometrical configuration selected for the mounting section of the ball, then the end of the rod would be configured to provide a suitable mechanical interface with the ball mounting structure prior to a returning action 214, block 212 allows to securely affix the ball to the end of the rod resulting in a strong mechanical joint between the mounting section and the rod. It will be understood that the parallel layout of the blocks illustrated just prior to block 212 is not meant to limit the invention to any particular sequence since such actions do not have to be performed in parallel sequence. For example, the configuring of the end of the rod does not have to be performed in any particular sequence relative to the configuring of the ball since such actions may be independently performed from one another in any desired order that best suits a given manufacturing process flow.

While the preferred embodiments of the present invention have been shown and described herein, it will be obvious that such embodiments are provided by way of example only. Numerous variations, changes and substitutions will occur to those of skill in the art without departing from the invention herein. Accordingly, it is intended that the invention be limited only by the spirit and scope of the appended claims.

## Claims

1. A valve 100 for a brake control actuator 101 comprising:
a rod 102 operable between respective operating conditions to selectively allow passage of brake fluid through the valve;
a ball 104 affixed at one end of the rod, the ball including a sealing section 106 that upon engagement against a ball-receiving seat in the valve blocks passage to brake fluid therethrough, the ball further including a mounting section 110 integral with the sealing section, the mounting section configured to provide a reduced footprint relative to an spheroidal footprint and enable a strong mechanical joint between the mounting section and the rod.

2. The valve of claim 1 wherein the mounting section comprises a pin 120 and the rod includes a bore configured to receive the pin.

3. The valve of claim 1 wherein the mounting section comprises a bore and the rod includes a pin configured to engage the bore.

4. The valve of claim 1 wherein the mounting section comprises a cylindrical section 130 circumferentially defining a midsection of the ball.

5. The valve of claim 1 wherein the cylindrical section is bounded at opposite axial ends thereof by corresponding angled surfaces (e.g., 132 and 134).

6. The valve of claim 1 wherein the mounting section comprises a generally V-shaped notch 136.

7. The valve of claim 1 wherein the mounting section comprises a hyperboloid section 140 defining a midsection of the ball.

8. A method for arranging a valve 100 for a brake control actuator 101, the valve including a rod 102 operable between respective operating conditions to selectively allow passage of brake fluid through the valve, the method comprising:
configuring (e.g., 204) a ball affixable at one end of the rod, the ball being configured to include a sealing section, and a mounting section integral with the sealing section;
configuring (e.g., 206) the sealing section so that upon engagement against a ball-receiving seat, the sealing section blocks passage to brake fluid therethrough;
configuring (e.g., 208) the mounting section to provide a reduced footprint relative to an spheroidal footprint while enabling a strong mechanical joint between the mounting section and the rod;
configuring (e.g., 210) the end of the rod to correspond with the mounting section of the ball; and
affixing (e.g., 312) the ball to the end of the rod.

9. The method of claim 8 wherein the mounting section is configured as a pin and the rod includes a bore configured to receive the pin.

10. The method of claim 8 wherein the mounting section is configured to define a bore and the rod includes a pin configured to engage the bore.

11. The method of claim 8 wherein the mounting section is configured as a cylindrical section circumferentially defining a midsection of the ball.

12. The method of claim 8 wherein the cylindrical section is bounded at opposite axial ends thereof by corresponding angled surfaces.

13. The method of claim 8 wherein the mounting section is configured as a generally V-shaped notch.

14. The method of claim 8 wherein the mounting section comprises a hyperboloid section defining a midsection of the ball.
